# EUROPÄISCHE PATENTANMELDUNG

(11) **EP 3 188 053 A1**
(43) Veröffentlichungstag der Anmeldung: **05.07.2017**
(21) Anmeldenummer: 15203199.3
(22) Anmeldetag: 30.12.2015
(51) Int. Cl.: G06F 17/50

(54) **VERFAHREN ZUM KONFIGURIEREN EINER CO-SIMULATION FÜR EIN GESAMTSYSTEM**

(71) Anmelder: Kompetenzzentrum - Das virtuelle Fahrzeug Forschungsgesellschaft mbH, 8010 Graz (AT)
(72) Erfinder: Benedikt, Martin, 8010 Graz (AT); Bernasch, Jost, 8010 Graz (AT); Holzinger, Franz, 8010 Graz (AT); Watzenig, Daniel, 8010 Graz (AT)
(74) Vertreter: Dilg, Haeusler, Schindelmann Patentanwaltsgesellschaft mbH

(57) **Zusammenfassung**

Die vorliegende Erfindung betrifft ein Verfahren zum Konfigurieren einer Co-Simulation für ein Gesamtsystem (bzw. eine Gesamtsimulation) mit zumindest einem ersten Teilsystem und einem zweiten Teilsystem. Gemäß dem Verfahren wird ein Verbindungsnetzwerks bestimmt, welches das erste Teilsystem und das zweite Teilsystem an einer Kopplung koppelt und bestimmt. Ferner werden erste Teilsysteminformationen des ersten Teilsystems und von zweiten Teilsysteminformationen des zweiten Teilsystems bestimmt. Ferner wird eine Ausführungsreihenfolge selektiert, mittels welcher bestimmt wird, in welcher Reihenfolge zueinander der erste Parameterausgang und der zweite Parameterausgang bestimmt werden. Ferner werden Extrapolationsverfahren bestimmt, mittels welchen die ersten und zweiten Parametereingänge während einer Makro-Schrittweite (z.B. zwischen den Koppelzeitpunkten) bestimmbar sind. Die Makro-Schrittweite wird bestimmt, welche die Koppelzeitpunkte vorgibt, an welchen eine Austausch der entsprechenden ersten und zweiten Eingangsparameter und die ersten und zweiten Ausgangsparameter zwischen den ersten und zweiten Teilsystemen durchgeführt wird. Die Kopplung des ersten und zweiten Teilsystems wird konfiguriert basierend auf dem Verbindungsnetzwerk, der ersten Teilsysteminformationen und zweiten Teilsysteminformationen, der Ausführungsreihenfolge, und den Extrapolationsverfahren und der Makro-Schrittweite und die Co-Simulation durchgeführt.

## Beschreibung

### Technisches Gebiet

Die vorliegende Erfindung betrifft ein Verfahren und eine Vorrichtung zum Konfigurieren einer Co-Simulation für ein Gesamtsystem.

### Hintergrund der Erfindung

Eine virtuelle Entwicklung von technischen Systemen ist Stand der Technik und ermöglicht frühzeitige Systemanalysen und virtuelles Testen und führt somit zu Zeit- und Kosteneinsparungen. Dabei werden in jeder Ingenieurs-Disziplin (z.B. Mechanik, Elektronik, etc.) Modelle für die spezifischen Komponenten in speziellen Simulationswerkzeugen entwickelt und für sich simuliert und analysiert. Einflüsse von anderen Systemen werden nur eingeschränkt betrachtet. Die Entwicklung eines Gesamtsystems erfordert allerdings ein Zusammenspiel aller technischer Domänen bzw. aller Komponenten, sodass diese Interaktionen auch auf virtueller Ebene abgebildet werden müssen. Co-Simulation bietet eine Möglichkeit um die verteilt modellierte und verteilt simulierte Modelle zusammen zu führen. Hierbei werden die Koppelgrößen zu definierten Zeitpunkten, nach so genannten Makro-Zeitschritten, während der Simulation ausgetauscht.
Die Eigenschaften der verwendeten Simulationswerkzeuge und die Charakteristiken der Modelle bestimmen, welcher Kopplungsalgorithmus verwendet werden kann. Erlauben Simulationswerkzeuge oder simulierte Modelle (z.B. FMI) ein wiederholen eines Rechenschrittes, so können iterative (implizite) Ansätze (strong coupling) angewandt werden. Meist wird jedoch ein dazu benötigtes Rücksetzten der Simulationswerkzeuge und Simulationsmodelle nicht unterstützt oder die Simulation muss in Echtzeit erfolgen, sodass nicht-iterative (explizite) Ansätze bemüht werden müssen. Im Falle von internen Schleifen (Datenabhängigkeiten) ist jedoch bei nicht-iterativer Co-Simulation eine Extrapolation von Koppelgrößen über den aktuellen Makro-Zeitschritt zwingend notwendig und führt zu Ungenauigkeiten.

Der dadurch entstehende Fehler kann durch geeignete Konfiguration der Co-Simulation vernachlässigbar klein gehalten werden, ist aber nach Stand der Technik manuell durch den Anwender der Co-Simulation zu tätigen. Dies ist zeitaufwändig und meist auch, aufgrund der vorherrschenden Komplexität der Co-Simulation, durch den Anwender der Co-Simulation manuell nicht machbar.

AT 509930 A2 mit dem Titel "Modellbasierte Methodik und Verfahren zur Quantifizierung der Qualität der Resultate von Co-Simulationen" beschreibt ein Verfahren zur Bewertung der Qualität des co-simulierten Gesamtsystems. Approximierte Modellbeschreibungen, Kopplungsinformationen und die Ausführungsreihenfolge als statische Metainformationen werden neben den, durch Extrapolation eingebrachten, modellierten Kopplungsunsicherheiten dazu verwendet, die Qualität vorab, d.h. vor dem Start der Co-Simulation, zu bestimmen.

In der Co-Simulation werden modellierte Teilsysteme über die Ein- und Ausgabeparameter der Modelle zu einem Gesamtmodell gekoppelt. Teilsysteme repräsentieren hierbei algebraische und/oder differentielle, Gleichungssysteme. Jedes Teilsystem wird jedoch unabhängig von anderen Teilsystemen über einen Makro-Zeitschritt durch einen eigenen numerischen Lösungsalgorithmus gelöst bzw. simuliert. Lösungsalgorithmen werden typischerweise vom Anwender in Anlehnung des vorliegenden und zu lösenden Gleichungssystems gewählt. In jedem Simulator eines Teilsystems wird ein spezieller numerischer Lösungsalgorithmus (Solver) eingesetzt. Bei Netzwerkinternen Schleifen entstehen Datenabhängigkeiten zwischen den involvierten Teilsystemen, sodass je nach Ausführungsreihenfolge - parallel oder sequentiell - mehr oder weniger Koppelgrößen (Eingangsparameter) durch Extrapolationsverfahren über den zu lösenden Makro-Zeitschritt "geschätzt" werden müssen. Diese Extrapolation ist notwendig um das vorherrschende Kausalitätsproblem zu lösen und führt zwangsläufig zu einem notwendigen Fehler.

### Darstellung der Erfindung

Es ist eine Aufgabe der vorliegenden Erfindung, eine Konfiguration einer Co-Simulation zu erstellen und zu verbessern.

Diese Aufgabe kann durch einem Verfahren zum Konfigurieren einer Co-Simulation für ein Gesamtsystem und mit einer Vorrichtung zum Konfigurieren einer Co-Simulation für ein Gesamtsystem gemäß den unabhängigen Ansprüchen gelöst werden.

Gemäß einem ersten Aspekt der vorliegenden Erfindung wird ein Verfahren zum Konfigurieren einer Co-Simulation für ein Gesamtsystem (bzw. eine Gesamtsimulation) mit zumindest einem ersten Teilsystem und einem zweiten Teilsystem. Das erste Teilsystem weist zumindest einen ersten Parametereingang und zumindest einen ersten Parameterausgang auf, wobei basierend auf dem ersten Parametereingang mittels eines ersten Lösungsalgorithmus der erste Parameterausgang bestimmbar ist, und wobei das zweite Teilsystem zumindest einen zweiten Parametereingang und zumindest einen zweiten Parameterausgang aufweist. Basierend auf dem zweiten Parametereingang ist mittels eines zweiten Lösungsalgorithmus der zweite Parameterausgang bestimmbar.

Gemäß dem Verfahren wird ein Verbindungsnetzwerk bestimmt, welches das erste Teilsystem und das zweite Teilsystem an einer Kopplung koppelt und bestimmt, welcher der ersten und zweiten Parameterausgänge als Koppelgröße für die entsprechenden ersten und zweiten Parametereingänge bestimmt sind.

Ferner werden erste Teilsysteminformationen (z.B. direkter Durchgriff, Ein-Ausgangsdynamiken, Momentanfrequenz, Simulationszeiten etc.) des ersten Teilsystems und zweite Teilsysteminformationen des zweiten Teilsystems bestimmt.

Ferner wird eine Ausführungsreihenfolge selektiert, mittels welcher bestimmt wird, in welcher Reihenfolge zueinander der erste Parameterausgang und der zweite Parameterausgang bestimmt werden (und somit festlegt, welche ersten und/oder zweiten Parametereingänge zum Lösen des Kausalitätsproblems extrapoliert werden müssen).

Ferner werden Extrapolationsverfahren bestimmt, mittels welcher die ersten und zweiten Parametereingänge während einer Makro-Schrittweite (d.h. zwischen den Koppelzeitpunkten), im Falle einer notwendigen Schätzung zum Lösen des Kausalitätsproblems, bestimmbar sind.

Die Makro-Schrittweite wird bestimmt, welche die Koppelzeitpunkte vorgibt, an welchen ein Austausch der entsprechenden ersten und zweiten Eingangsparameter und den ersten und zweiten Ausgangsparameter zwischen den ersten und zweiten Teilsystemen durchgeführt wird, und welche den Extrapolationshorizont von ersten und zweiten Eingangsparametern festlegt.

Die Kopplung des ersten und zweiten Teilsystems wird konfiguriert basierend auf dem Verbindungsnetzwerk, der ersten Teilsysteminformationen und zweiten Teilsysteminformationen, der Ausführungsreihenfolge, dem Extrapolationsverfahren und der Makro-Schrittweite und die Co-Simulation während der Makro-Zeitschritte durchgeführt.

Ein Teilsystem weist ein Teilmodell auf, welches ein reales Modell abbildet (z.B. ein Bauteil selbst oder ein Strömungsmodell eines Bauteils etc.). Ein Modell beschreibt über algebraische und/oder differenzielle Zusammenhänge das Verhalten eines Teilsystems. Dieses Teilmodell wird mittels eines Simulationstools hergestellt und simuliert (z.B. ein CAD-Programm). Um einen Gesamtsystem zu Modellieren und zu Simulieren und somit eine wahrheitsgemäße Aussage des Verhaltens des Gesamtsystems in der realen Welt treffen zu können, wird das Gesamtsystem aus mehreren Teilsystemen aufgebaut. Jedes Teilsystem löst einen bestimmten Systembereich (Strömungsmodell, Strukturmodell, Temperaturprofil) des Gesamtsystems. Die einzelnen Teilsysteme beeinflussen sich untereinander. So ergibt beispielsweise ein bestimmtes Temperaturprofil ein davon abhängiges Strömungsmodell oder Strukturmodell (z.B. ein unterschiedliches Verformungsverhalten des Strukturmodells).

Eingangsparameter sind jene Parameter, welcher der Lösungsalgorithmus als Eingabe benötigt, um daraus das Simulationsergebnis bzw. die Ausgangsparameter zu bestimmen. Die Eingangsparameter sind z.B. Temperatur, geometrische Daten, Kraft, Drehzahl, Umgebungsparameter (z.B. Außentemperatur), Strömung etc., welche von dem Lösungsalgorithmus benötigt werden.

Der Lösungsalgorithmus (Solver) führt die gewünschte Simulation in einem Teilsystem durch. Der erste Lösungsalgorithmus oder der zweite Lösungsalgorithmus können dabei gleich sein oder sich unterscheiden. Zudem können individuelle Lösungsalgorithmen der Teilsysteme unterschiedliche feste oder variable Schrittweiten zum Lösen der individuellen Teilsysteme verwenden. Der Lösungsalgorithmus repräsentiert ein numerisches Verfahren, mit welchem aus den Eingangsparametern und den modellierten Teilsystemen die Ausgangsparameter bestimmt werden können.

Die Ausgangsparameter der Teilsysteme sind bestimmte Werte, welche mittels zugehörigen Lösungsalgorithmen berechnet und simuliert werden. Zum Beispiel können dies geometrische Werte zum Bilden eines geometrischen Modells sein, wenn zum Beispiel ein dynamisches Verformungsverhalten, modelliert über Differentialgleichungen, in einem Teilsystem simuliert werden soll. Beispielsweise kann die Spannung U des algebraischen Teilmodells U=R*I simuliert werden, wobei der Wiederstand R einen Teilsystem internen Modellparameter darstellt und I die Stromstärke ist und entsprechend den Eingangsparameter darstellt. Der Eingangsparameter I kann in einem anderen Teilsystem berechnet werden und ist dort der entsprechende Ausgangsparameter.

Das Verbindungsnetzwerk bestimmt, wie und welche Teilsysteme miteinander gekoppelt werden sollen. Das Verbindungsnetzwerk bildet zwischen zwei Teilsystemen eine Kopplung und bestimmt, welcher der ersten und zweiten Parameterausgänge als Koppelgröße für die entsprechenden ersten und zweiten Parametereingängen bestimmt sind. Ein Parameterausgang eines Teilsystems kann mehreren Parametereingängen anderer Teilsysteme zugeordnet sein.

Die Kopplung kann drahtgebunden oder drahtlos zum Austausch der Informationen ausgeführt werden.

Die Teilsysteminformationen stellen Informationen eines Teilsystems dar, welche das Teilsystem charakterisieren. Die Teilsysteminformationen können ggf. gesteuert und angepasst werden oder werden durch die Kopplung mit anderen Teilsystemen beeinflusst. Die Teilsysteminformation sind, wie unten detaillierter beschrieben z.B. ein direkter Durchgriff, Ein-Ausgangsdynamiken, Momentanfrequenz und/oder Simulationszeiten.

Teilsysteminformationen, wie der "direkte Durchgriff" oder die "Eingangs-/Ausgangsdynamiken" können für individuelle Teilsysteme vorab verfügbar oder bekannt sein. Beispielhaft könnten diese Informationen im Rahmen von zusätzlicher Information vom Teilsystemersteller (z.B. dem Simulationswerkzeug) gemeinsam mit dem Teilsystem bereitgestellt werden. In diesem Fall würde sich der Analyseaufwand in der Analyse der Teilsysteme für individuelle Teilsysteme entsprechend reduzieren.

Zudem wird die Ausführungsreihenfolge selektiert, mittels welcher bestimmt wird, in welcher Reihenfolge zueinander der erste Parameterausgang und der zweite Parameterausgang bestimmt werden. Mit anderen Worten wird bestimmt, wann welches Teilsystem ausgeführt (d.h. über den definierten Makro-Zeitschritt simuliert) wird. Beispielsweise ist es bei sich gegenseitig beeinflussenden Teilsystemen vorteilhaft, zunächst ein bestimmtes Teilsystem vorab Auszuführen und die daraus bezogenen Ausgangsparameter für ein folgendes Teilsystem, unter der Annahme von gleichen Makro-Zeitschritten, ohne Extrapolation der Eingangsparameter zu verwenden (sequentielle Ausführung). Die Ausführungsreihenfolge kann vom Anwender vorgegeben werden und/oder in dem Schritt des Konfigurierens angepasst werden.

Ferner werden Extrapolationsverfahren bestimmt, mittels welcher die ersten und zweiten Parametereingänge während einer Makro-Schrittweite (z.B. zwischen den Koppelzeitpunkten) bestimmbar sind. Für individuelle erste und zweite Eingangsparameter können unterschiedlichen Extrapolationsverfahren verwendet werden. Falls keine Parametereingänge für den aktuellen Makro-Zeitschritt zur Verfügung stehen, müssen diese Werte extrapoliert (geschätzt) und entsprechend interpoliert werden, um daraus die Ausgangsparameter zu berechnen. Beispielsweise sind für bestimmte Lösungsalgorithmen zum Lösen der Teilsysteme, unterschiedliche Extrapolationsverfahren geeignet, sodass eine geeignete Auswahl des Extrapolationsverfahrens die Simulationsergebnisse der Teilsysteme positiv beeinflusst.

Die Kopplung des ersten und zweiten Teilsystems wird konfiguriert basierend auf dem Verbindungsnetzwerk, der ersten Teilsysteminformationen und zweiten Teilsysteminformationen, der Ausführungsreihenfolge, dem Extrapolationsverfahren und der Makro-Schrittweite. Aufgrund der Berücksichtigung der oben genannten Elemente bei der Kopplung von zwei oder mehreren Teilsystemen wird das Simulationsergebnis der Gesamtsimulation verbessert, da basierend auf den festgestellten Informationen die Konfiguration der Teilsysteme zueinander (z.B. Ausführungsreihenfolge, dem Verbindungsnetzwerk etc.) und die Konfiguration der Teilsysteme selbst (Makro-Schrittweite, Auswahl Extrapolationsverfahren) eingestellt bzw. verbessert werden kann. Ferner kann insbesondere durch eine angepasste und verbesserte Kopplung die Dauer der Gesamtsimulation sowie der Ressourcenverbrauch reduziert werden.

Der Anwender einer Co-Simulation steht heute vor der Herausforderung die resultierende Gesamtsimulation zu konfigurieren. Im Rahmen der Konfiguration definiert der Anwender z.B. die Ausführungsreihenfolge der Teilsysteme und für eine Vielzahl von Koppelsignalen (z.B. Eingangsparameter oder Ausgangsparameter) sind die Extrapolationsansätze sowie die zugehörigen Makro-Schrittweiten vorzugeben. Mittels dem erfindungsgemäßen Ansatz wird die Konfiguration verbessert, indem bei der Konfiguration insbesondere die Teilsysteminformationen, das Verbindung Netzwerk, die Ausführungsreihenfolge, das Extrapolationsverfahren und die Makro-Schrittweite berücksichtigt werden.

Gemäß einer weiteren beispielhaften Ausführungsform des Verfahrens wird nach einem Marko-Zeitschritt die Co-Simulation beendet oder die Co-Simulation erneut durchgeführt. Bei einem erneuten interaktiven Durchführen des Verfahrens bzw. der Co-Simulation, können die Simulationsergebnisse, die ermittelten Teilsysteminformationen (z.B. direkter Durchgriff, Ein-Ausgangsdynamiken, Momentanfrequenz, Simulationszeiten etc.) und das Verbindungsnetzwerk, und die Konfiguration verwendet werden, um bei dem Durchlauf der kommenden Simulation die Ausführungsreihenfolge, die Extrapolationsverfahren und die Makroschrittweite anzupassen. Somit optimiert sich für jeden Durchlauf das Ergebnis einer Co-Simulation, da von Durchlauf zu Durchlauf eine verbesserte Konfiguration der Kopplung der Teilsysteme durchgeführt wird.

Gemäß einer weiteren beispielhaften Ausführungsform wird nach einem Makro-Zeitschritt, zum Koppelzeitpunkt im Rahmen einer Teilsystemanalyse, eine Analyse von Koppelereignissen (z.B. diskrete Ereignisse, hohe Systemdynamiken) durchgeführt und basierend auf der Analyse die Teilsysteminformationen des ersten und/oder zweiten Teilsystems, die Ausführungsreihenfolge, die Extrapolationsverfahren und/oder die Makro-Schrittweite angepasst bzw. konfiguriert. Beispielsweise kann ein sprunghafter Verlauf eines Koppelsignals während einer Simulation in einem Teilsystem zwischen den Koppelzeitpunkten bedeuten, dass eine ungeeignete Ausführungsreihenfolge, ein ungeeignetes Extrapolationsverfahren (und somit ungeeignete Eingangsparameter bestimmt wurden) angewendet wurde oder die Wahl der Makro-Schrittweite ungeeignet (z.B. zu groß gewählt) war. Auf Basis dieser Informationen kann bei einem erneuten Durchlauf der Co-Simulation die Wahl der Ausführungsreihenfolge, und/oder die Wahl des Extrapolationsverfahrens und/oder die Wahl der Makro-Schrittweite angepasst werden.

Im Rahmen einer Analyse der Teilmodelle werden Eingangs- und Ausgangsparameter (Koppelsignale) der Teilsysteme zur Laufzeit auf unterschiedliche Eigenschaften analysiert. Eingangs- und Ausgangsparameter des Teilmodells werden zum Beispiel in einer separaten Komponente zur Analyse des Teilmodells herangezogen. Ferner kann die Bestimmung des sog. "direkten Durchgriff", der "Eingangs-/ Ausgangsdynamiken", die Simulationszeiten der Teilsysteme und eine "Frequenzanalyse" (Momentanfrequenz) sowie eine Berechnungszeit der Teilsysteme und diskrete Ereignisse berücksichtigt werden.

Gemäß einer weiteren beispielhaften Ausführungsform weisen die Teilsysteminformationen die Ein-Ausgangsdynamiken zwischen ersten Eingangsparameter und ersten Ausgangsparameter des ersten Teilsystems und zwischen zweiten Eingangsparameter und zweiten Ausgangsparameter des zweiten Teilsystems auf.

Als "Eingangs-/Ausgangsdynamiken" der Teilsysteme werden die dynamischen Eigenschaften der Teilsysteme zwischen allen verfügbaren Eingangs-/Ausgangskombinationen der individuellen Teilsysteme bezeichnet. Beispielhaft kann ein Teilsystem zwischen einem Eingang und einem Ausgang eine bzw. eine andere Eingangs-/Ausgangsdynamik als bzgl. einem weiteren Eingang und einem weiteren Ausgang des Teilsystems oder einem weiteren Teilsystems aufweisen. Diese Eingangs-/Ausgangsdynamiken der Teilsysteme können über Methoden zur datenbasierten Systemidentifikation von MIMO (multiple-input multiple-output) Systemen oder, Eingangs/Ausgangsspezifisch, von SISO (single-input single-output) erfolgen. Die Dynamik des vorliegenden Teilsystems bestimmt maßgeblich welche Art von Lösungsalgorithmus oder Schrittweite verwendet werden muss, um eine stabile und genaue numerische Lösung zu erhalten. Bei dem erfindungsgemäßen Verfahren werden die Eingangs-/Ausgangsdynamiken der Teilsysteme maßgeblich dazu verwendet werden die Ausführungsreihenfolge und individuelle Extrapolationsverfahren auszuwählen.

Gemäß einer weiteren beispielhaften Ausführungsform weisen die Teilsysteminformationen eine Simulationszeit des ersten Teilsystems und/oder des zweiten Teilsystems auf. Beispielsweise kann ein erstes Teilsystem eine unterschiedliche Simulationszeit als das zweite Teilsystem aufweisen (z.B. durch Verwendung unterschiedlicher Makro-Schrittweiten). Basierend in Abhängigkeit von der individuellen Simulationszeit der Teilsysteme kann beispielsweise die Makroschrittweite oder die Ausführungsreihenfolge angepasst werden, um den Durchlauf der Co-Simulation zu verbessern.

Ergänzend wird der Sachverhalt festgehalten, dass das vorgestellte Verfahren und die Vorrichtung zur Konfiguration einer Co-Simulation auch im Rahmen einer Echtzeit-Co-Simulation angewandt werden kann. Im Unterschied zu einer (Nicht-Echtzeit) Co-Simulation erfordert eine Echtzeit-Co-Simulation, dass die Teilsysteme in Echtzeit simulierbar und somit die ersten und zweiten Parameterausgänge in Echtzeit bestimmbar sind und somit zu definierten Zeitpunkten, den Koppelzeitpunkten, in Anlehnung an die reale Zeit (z.B. Wanduhr), zur weiteren Verwendung (z.B. Extrapolation) vorliegen.

Gemäß einer weiteren beispielhaften Ausführungsform weisen die Teilsysteminformationen die benötigten Berechnungszeiten zum Ausführen der Simulation der individuellen Teilsysteme für die jeweiligen Makro-Zeitschritte auf, so dass mittels in Bezug stellen der von den Teilsystemen benötigten Berechnungszeit mit den jeweiligen Makro-Zeitschritten der Teilsysteme zu den jeweiligen Koppelzeitpunkten Anpassungen im zeitlichen Verhalten für die Durchführung der Co-Simulation in Echtzeit durchgeführt werden. Durch in Bezug stellen der von den Teilsystemen benötigte Berechnungszeit mit den jeweiligen Makro-Zeitschritten der Teilsysteme zu den jeweiligen Koppelzeitpunkten können somit Engpässe im zeitlichen Verhalten für eine Ausführung der Co-Simulation in Echtzeit erkannt werden, welchen durch eine vorteilhafte Konfiguration der Co-Simulation während der Laufzeit entgegenwirkt wird. Zum Beispiel kann in dem Schritt des Konfigurierens berücksichtigt werden, wenn z.B. ein Teilsystem, welches eine kürzere Berechnungszeit (als Teilsysteminformation) benötigt als ein Makro-Zeitschritt (welcher z.B. in Echtzeit definiert wird). In diesem Fall kann beispielsweise die Ausführungsreihenfolge der Teilsysteme angepasst werden oder freie Rechenkapazitäten anderweitig eingesetzt werden, um somit mittels Konfiguration die Co-Simulation zu verbessern.

Gemäß einer weiteren beispielhaften Ausführungsform weisen die Teilsysteminformationen eine Momentanfrequenz der ersten und/oder zweiten Eingangsparameter und/oder der ersten und/oder zweiten Ausgangsparameter auf.

Bei einer "Frequenzanalyse" der Koppelsignale werden einzelne Koppelsignale auf deren Frequenzinhalt untersucht. Im Fokus der Untersuchungen steht die Ermittlung der sog. Momentanfrequenz, welche durch Methoden aus der Signalverarbeitung ermittelt werden kann. Beispielhaft wird die Momentanfrequenz durch die sog. Hilbert-Huang-Transformation bestimmt.

Gemäß einer weiteren beispielhaften Ausführungsform weisen die Teilsysteminformationen einen direkten Durchgriff der ersten und/oder zweiten Eingangsparameter auf die ersten und/oder zweiten Ausgangsparameter der Teilsysteme auf.

Der Begriff "Direkter Durchgriff" bezeichnet in der Regelungstechnik eine Systemeigenschaft, wo eine Änderung an einem Eingang eines Systems direkt und unverzögert zu einer Änderung (Wirkung) am Ausgang des Systems führt. Die Detektion eines "direkter Durchgriff" kann z.B. datenbasierte Methoden der Systemidentifikation erfolgen. Im Kontext der Co-Simulation führt die Integration von Teilsystemen mit "direktem Durchgriff' zu algebraischen Schleifen und somit zu Schwierigkeiten während der Co-Simulation bzw. dem übergeordneten Lösungsprozess. Aus diesem Grund ist die Kenntnis ob zwischen Eingangs- und Ausgangsgrößen von Teilsystemen ein direkter Durchgriff existiert von hohem Interesse und wird deshalb in weiterer Folge für das Verfahren zur automatischen Konfiguration der Co-Simulation verwendet.

Gemäß einer weiteren beispielhaften Ausführungsform weisen die Teilsysteminformationen eine Analyse von Koppelereignissen (diskrete Ereignisse, hohe Systemdynamiken) der ersten und/oder zweiten Eingangsparameter und/oder der ersten und/oder zweiten Ausgangsparameter der Teilsysteme auf.

Gemäß einer weiteren beispielhaften Ausführungsform weist der Schritt des Bestimmens der Makro-Schrittweite ein Bestimmen einer ersten Makro-Schrittweite des ersten Teilsystems und ein Bestimmen einer zweiten Makro-Schrittweite des zweiten Teilsystems auf. Die erste Makro-Schrittweite gibt erste Koppelzeitpunkte vor, an welchen jeweils der erste Ausgangsparameter bestimmbar ist, wobei die zweite Makro-Schrittweite zweite Koppelzeitpunkte vorgibt, an welchen jeweils der zweite Ausgangsparameter bestimmbar ist.

Bei einer Co-Simulation sind unterschiedlichen Teilsysteme involviert, welche auch schrittweise über unterschiedliche Makro-Schrittweiten simuliert werden können. Durch die Anwendung unterschiedlicher Makro-Schrittweiten ergeben sich auch unterschiedliche "Simulationszeiten" der individuellen Teilsysteme. Die Simulationszeiten beschreiben wie weit die individuellen Teilsysteme simuliert wurden und können z.B. direkt aus den Koppelsignaldaten (d.h. den Ausgangsparametern) mit Zeitstempel erfasst werden.

Gemäß einer weiteren beispielhaften Ausführungsform weist der Schritt des Bestimmens der Extrapolationsverfahren ein Bestimmen von ersten Extrapolationsverfahren des ersten Teilsystems, mittels welchem die ersten Parametereingänge während der ersten Makro-Schrittweite (und zwischen den Koppelzeitpunkten) bestimmbar sind, und ein Bestimmen von zweiten Extrapolationsverfahren des zweiten Teilsystems, mittels welchem die zweiten Parametereingänge während der zweiten Makro-Schrittweite (und zwischen den Koppelzeitpunkten) bestimmbar sind, auf. Für individuelle erste und zweite Eingangsparameter können unterschiedlichen Extrapolationsverfahren verwendet werden.

Gemäß einem weiteren Aspekt der vorliegenden Erfindung wird eine Vorrichtung zum Konfigurieren einer Co-Simulation für ein Gesamtsystem mit zumindest einem Teilsystem und einem zweiten Teilsystem beschrieben. Das erste Teilsystem weist zumindest einen ersten Parametereingang und zumindest einen ersten Parameterausgang auf, wobei basierend auf dem ersten Parametereingang mittels eines ersten Lösungsalgorithmus der erste Parameterausgang bestimmbar ist. Das zweite Teilsystem weist zumindest einen zweiten Parametereingang und zumindest einen zweiten Parameterausgang auf, wobei basierend auf dem zweiten Parametereingang mittels eines zweiten Lösungsalgorithmus der zweite Parameterausgang bestimmbar ist.

Die Vorrichtung weist eine Verbindungseinheit zum Bestimmen eines Verbindungsnetzwerks, welches das erste Teilsystem und das zweite Teilsystem an einer Kopplung koppelt und bestimmt, welcher der ersten und zweiten Parameterausgänge als Koppelgröße für die entsprechenden ersten und zweiten Parametereingängen bestimmt sind, auf.

Die Vorrichtung weist ferner eine Bestimmungseinheit zum Bestimmen von ersten Teilsysteminformationen (direkter Durchgriff, Ein-Ausgangsdynamiken, Momentanfrequenz, Simulationszeiten, Berechnungszeit der Teilsysteme und diskrete Ereignisse) des ersten Teilsystems und von zweiten Teilsysteminformationen des zweiten Teilsystems auf. Die Vorrichtung weist ferner eine Selektionseinheit zur Selektion einer Ausführungsreihenfolge, mittels welcher bestimmt wird, in welcher Reihenfolge zueinander der erste Parameterausgang und der zweite Parameterausgang bestimmt wird, auf. Die Vorrichtung weist ferner eine Extrapolationseinheit zum Bestimmen der Extrapolationsverfahrens, mittels welchem die ersten und zweiten Parametereingänge während einer Makro-Schrittweite (und zwischen den Koppelzeitpunkten) bestimmbar sind, auf. Die Vorrichtung weist ferner eine Schrittweiteneinheit zum Bestimmen einer Makro-Schrittweite bzw. der Makro-Schrittweiten auf, welche Koppelzeitpunkte vorgibt, an welchen eine Austausch der entsprechenden ersten und zweiten Eingangsparameter und die ersten und zweiten Ausgangsparameter zwischen den ersten und zweiten Teilsystemen durchgeführt wird.

Die Vorrichtung weist ferner einen Konfigurator zum Konfigurieren der Kopplung des ersten und zweiten Teilsystems basierend auf dem Verbindungsnetzwerk, der ersten Teilsysteminformationen und zweiten Teilsysteminformationen, der Ausführungsreihenfolge, den Extrapolationsverfahren, der Makro-Schrittweiten und zum Durchführen der Co-Simulation der ersten und zweiten Teilsysteme auf.

Die unterschiedlichen Einheiten, insbesondere Verbindungseinheit, Selektionseinheit, Extrapolationseinheit, Schrittweiteneinheit, und Konfigurator etc. der Vorrichtung können jeweils als ein Prozessor realisiert sein. Es ist auch möglich, eine beliebige Kombination bzw. Mehrzahl dieser oder anderer Einheiten als gemeinsamen Prozessor auszugestalten. Es können auch alle Einheiten als ein gemeinsamer Prozessor realisiert sein.

Gemäß einer weiteren beispielhaften Ausführungsform wird ein computerlesbares Speichermedium beschrieben, in dem ein Programm zum Konfigurieren einer Co-Simulation für ein Gesamtsystem gespeichert ist, welches Programm, wenn es von einem Prozessor ausgeführt wird, das oben beschriebene Verfahren ausführt oder steuert.

Gemäß einer weiteren beispielhaften Ausführungsform wird ein Programm-Element zum Konfigurieren einer Co-Simulation für ein Gesamtsystem beschrieben, welches Programm-Element, wenn es von einem Prozessor ausgeführt wird, das oben beschriebene Verfahren ausführt oder steuert.

Zusammenfassend beschreibt die vorliegende Erfindung ein Verfahren zur automatisierten Konfiguration von Co-Simulation. Eine automatisierte Konfiguration der Co-Simulation erfolgt im Hinblick auf die Qualität der Simulationsergebnisse und nutzt zusammenfassend folgende Erkenntnisse: die Ausführungsreihenfolge der Simulationswerkzeuge bestimmt welche Koppelsignale extrapoliert werden müssen; Extrapolationsfehler nehmen mit größer werdender Makro-Schrittweite bei nicht-iterativer Co-Simulation zu; und Extrapolationsverfahren eignen sich in Abhängigkeit der Anwendung unterschiedlich gut zur Kopplung.

Abstrakt und allgemein betrachtet werden bei einer Co-Simulation, nichteinsehbare, Teilsysteme zu einem Gesamtsystem, durch Verbinden der Teilsystemeingänge und -ausgänge, vereint. Zur Konfiguration einer Co-Simulation benötigte Informationen sind somit dem Anwender i.A. nicht zugänglich. Das Verbindungsnetzwerk stellt eine verfügbare Information dar und beschreibt, welche Teilsystemeingänge mit welchem Teilsystemausgang verbunden sind. Neben dem generell verfügbaren Verbindungsnetzwerk werden bei diesem Verfahren die involvierten Teilsysteme zur Laufzeit analysiert und dadurch weitere Informationen für eine automatisierte Konfiguration der Co-Simulation extrahiert.

Das erfindungsgemäße Verfahren baut zusätzlich auch auf Detailwissen der verwendeten Extrapolationsverfahren auf. Speziell wird hier auf mathematische Modelle der Extrapolationsverfahren verwiesen, welche die Ableitung einer sog. "effizienten Bandbreite" zulassen.

Bei dem erfindungsgemäßen Verfahren zur automatisierten Konfiguration der Co-Simulation können weitere nützliche Informationen flexibel mitberücksichtigt werden. Beispielhaft seien hier Information bzgl. der unterlagerten und verwendeten numerischen Lösungsalgorithmus zum Simulieren der individuellen Teilsysteme angeführt. Extrapolationen von Eingangsgrößen eines Teilsystems können unerwünschte Effekte, wie z.B. Laufzeiteinbußen oder numerische Probleme, in unterlagerten Lösungsalgorithmen hervorrufen. Denkbar sind auch z.B. Informationen bzgl. der Dynamik der Teilsysteme.

Allgemein besteht eine Co-Simulation aus zumindest zwei interagierenden Teilsystemen. Durch den ausschließlichen und somit beschränkten Datenaustausch zu diskreten Zeitpunkten (den Koppelzeitpunkten) während der Co-Simulation gilt es ein Kausalitätsproblem durch Extrapolation der Koppelgrößen zu lösen. Hierbei entscheidet maßgeblich die Ausführungsreihenfolge welche Koppelgrößen (Eingangsparameter) extrapoliert werden müssen und auch an welchen Stellen Koppelfehler in das Gesamtsystem eingebracht werden. Beispielhaft wird dies im Folgenden unter der Annahme gleicher Makro-Zeitschrittweiten der involvierten Teilsysteme diskutiert. Werden alle Teilsysteme parallel gerechnet, so müssen alle Koppelsignale in den Kopplungen über die definierten Makro-Zeitschritte extrapoliert werden. Werden im Gegensatz dazu das erste Teilsystem vor dem zweiten Teilsystem und anschließend dem dritten Teilsystem gerechnet, so muss nur das Koppelsignal in der zweiten Kopplung zwischen dem dritten Teilsystem und dem zweiten Teilsystem in jedem Co-Simulationsschritt extrapoliert werden.

Zum Lösen des Kausalitätsproblems im Rahmen der Co-Simulation werden Koppelsignale extrapoliert. Die unterschiedlichen Extrapolationsansätze, inklusive Maßnahmen zu Korrektur des Koppelfehlers, nutzen zum aktuellen Zeitpunkt vorhandene Koppelsignaldaten. Die Wahl des Extrapolationsansatzes für spezielle Anwendungsfälle kann dem Anwender einer Co-Simulation überlassen werden. Das hier erfindungsgemäße Verfahren baut auf mathematischen Modellen individueller Extrapolationsansätze auf und nutzt daraus abgeleitete Merkmale der Extrapolation. Ein Beispiel für ein solches Merkmal ist die sog. "effektive Bandbreite", welche aus einer Übertragungsfunktion der individuellen Kopplung bestimmt werden kann. Makro-Zeitschrittweiten definieren jene diskreten Zeitpunkte (Koppelzeitpunkte) während der Co-Simulation, an welchen der Datenaustausch zwischen Teilsystemen erfolgt. Da unterschiedliche Teilsysteme unterschiedliche Dynamiken besitzen können und auch unterschiedliche Extrapolationsansätze verwendet werden ist grundlegend eine unterschiedliche Wahl von Makro-Zeitschrittweiten sinnvoll.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware (z.B. FPGA oder ASIC), oder in beliebig hybrider Form, das heißt mittels Software-Komponenten und Hardware-Komponenten, realisiert werden. Die Teilsysteme können z.B. lokal auf einen Rechner (auch verteilt auf unterschiedlichen Rechenkernen) oder topologisch netzwerk-verteilt auf unterschiedlichen Rechnern simuliert werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Co-Simulation für ein Gesamtsystem gemäß einer beispielhaften Ausführungsform der vorliegenden Erfindung,
Fig. 2 eine schematische Darstellung eines Ablaufs des Rahmens gemäß einer beispielhaften Darstellung des erfindungsgemäßen Verfahrens,
Fig. 3 eine schematische Darstellung einer beispielhaften Ausführungsform der vorliegenden Erfindung,
Fig. 4 eine schematische Darstellung einer Extrapolation zwischen zwei Koppelzeitpunkten.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

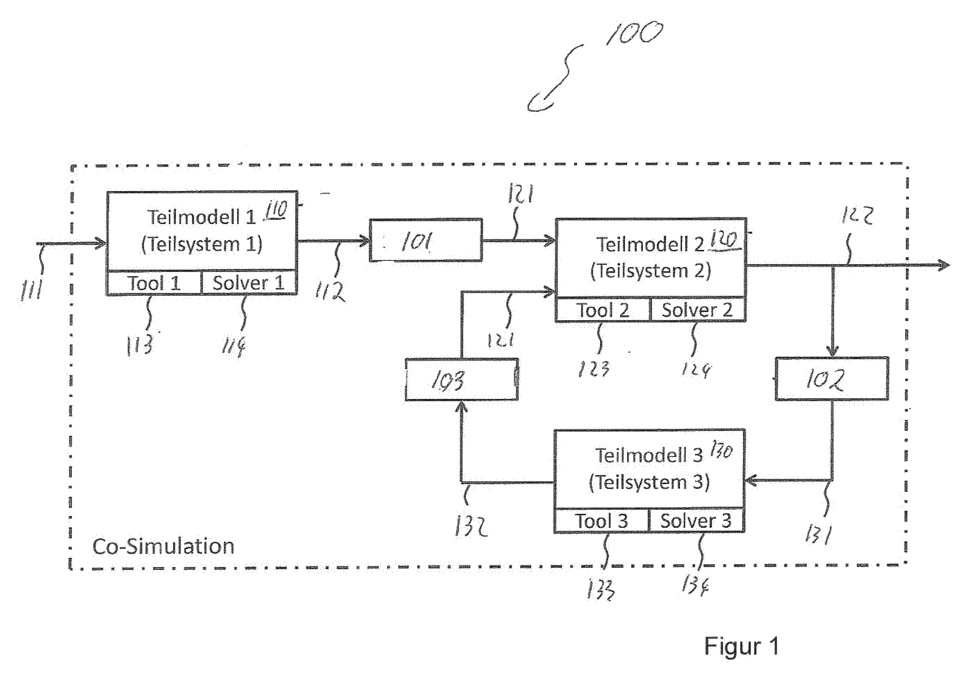

Fig. 1 zeigt eine schematische Darstellung einer Co-Simulation für ein Gesamtsystem 100 gemäß einer beispielhaften Ausführungsform der vorliegenden Erfindung. In Figur 1 wird eine Co-Simulation aus einem ersten Teilmodell 110, einem zweiten Teilmodell 120 und einen dritten Teilmodell 130 aufgebaut. Das erste Teilsystem 110 weist zumindest einen ersten Parametereingang 111 und zumindest einen ersten Parameterausgang 112 auf, wobei basierend auf dem ersten Parametereingang 111 mittels eines ersten Lösungsalgorithmus 114 der erste Parameterausgang 112 bestimmbar ist.

Das zweite Teilsystem 120 weist zumindest einen zweiten Parametereingang 121 und zumindest einen zweiten Parameterausgang 122 auf, wobei basierend auf dem zweiten Parametereingang 121 mittels eines zweiten Lösungsalgorithmus 124 der zweite Parameterausgang 122 bestimmbar ist.

Das dritte Teilsystem 130 weist zumindest einen dritten Parametereingang 131 und zumindest einen dritten Parameterausgang 132 auf, wobei basierend auf dem dritten Parametereingang 131 mittels eines dritten Lösungsalgorithmus 134 der zweite Parameterausgang 132 bestimmbar ist.

Ein Teilsystem 110, 120, 130 weist jeweils ein Teilmodell auf, welches ein reales Modell abbildet (z.B. ein Bauteil selbst oder ein Strömungsmodell eines Bauteils etc.). Ein Modell beschreibt über algebraische und/oder differenzielle Zusammenhänge das Verhalten eines Teilsystems 110, 120, 130. Dieses Teilmodell wird mittels eines Simulationstools 113, 123, 133 hergestellt und simuliert (z.B. ein CAD-Programm). Um einen Gesamtsystem 100 zu Modellieren und zu Simulieren und somit eine wahrheitsgemäße Aussage des Verhaltens des Gesamtsystems 100 in der realen Welt treffen zu können, wird das Gesamtsystem 100 aus mehreren Teilsystemen 110, 120, 130 aufgebaut. Jedes Teilsystem 110, 120, 130 löst einen bestimmten Systembereich (Strömungsmodell, Strukturmodell, Temperaturprofil) des Gesamtsystems 100. Die einzelnen Teilsysteme 110, 120, 130 beeinflussen sich untereinander. So ergibt beispielsweise ein bestimmtes Temperaturprofil ein davon abhängiges Strömungsmodell oder Strukturmodell (z.B. ein unterschiedliches Verformungsverhalten des Strukturmodells).

Die Teilsysteme 110, 120, 130 können lokal auf einen Rechner (auch verteilt auf unterschiedlichen Rechenkernen) oder topologisch netzwerk-verteilt auf unterschiedlichen Rechnern simuliert werden.

Die Eingangsparameter 111, 121, 131 sind diejenigen Parameter, welche der Lösungsalgorithmus 114, 124, 134 als Eingabe benötigt, um daraus das Simulationsergebnis bzw. die Ausgangsparameter 112, 122, 132 zu bestimmen. Die Eingangsparameter 111, 121, 131 sind z.B. Temperatur, geometrische Daten, Festigkeiten, Kraft, Drehzahl, Umgebungsparameter (z.B. Außentemperatur), Strömung etc., welche von dem Lösungsalgorithmus benötigt werden.

Der Lösungsalgorithmus (Solver) 114, 124, 134 führt die gewünschte Simulation in einem Teilsystem 110, 120, 130 durch. Der erste Lösungsalgorithmus 114 oder der zweite Lösungsalgorithmus 124 können dabei gleich sein oder sich unterscheiden. Zudem können individuelle Lösungsalgorithmen der Teilsysteme unterschiedliche feste oder variable Schrittweiten zum Lösen der individuellen Teilsysteme verwenden. Der Lösungsalgorithmus 114, 124, 134 repräsentiert ein numerisches Verfahren, mit welcher aus den Eingangsparametern 111, 121, 131 und den modellierten Teilsystemen 110, 120, 130 die Ausgangsparameter 112, 122, 132 bestimmt werden können.

Die Ausgangsparameter 112, 122, 132 in den Teilsystemen 110, 120, 130 sind bestimmte Werte, welche mittels des Lösungsalgorithmus 114, 124, 134 berechnet und simuliert werden. Während eines Makro-Zeitschritts können auch mehrere Werte der Ausgangsparameter 112, 122, 132 bestimmt werden.

Zwischen dem ersten Teilsystem 110 und dem zweiten Teilsystem 120 findet die erste Kopplung 101 statt. Zu einem bestimmten Koppelzeitpunkt werden die ersten Parameterausgänge bzw. Ausgangsparameter 112 von dem ersten Teilsystem 110 bezogen und als zweite Parametereingänge bzw. Eingangsparameter 121 dem zweiten Teilsystem 120 bereitgestellt. In einer zweiten Kopplung 102 wird beispielsweise der zweite Ausgangsparameter des zweiten Teilsystems 120 als dritter Eingangsparameter 131 in dem dritten Teilsystem 130 bereitgestellt.

Ferner kann ein Teilsystem beispielsweise auch mehrere Eingangsparameter 121 aufweisen, welche aus unterschiedlichen Teilmodellen 110, 130 bezogen werden. Im vorliegenden Beispiel wird beispielsweise ein Dritter Ausgangsparameter 132 an einer dritten Kopplung 103 als zweiter Eingangsparameter 121 dem zweiten Teilsystem 120 bereitgestellt. Gleichzeitig wird über die erste Kopplung 101 der erste Ausgangsparameter 112 als weiterer zweiter Eingangsparameter 121 dem Teilsystem 120 bereitgestellt.

Daraus wird klar, dass sich die Teilsysteme 120, 130 gegenseitig beeinflussen, wobei durch eine verbesserte Konfiguration der Kopplungen 101, 102, 103 gemäß dem erfindungsgemäßen Verfahren eine Co-Simulation des Gesamtsystems 100 verbessert werden kann.

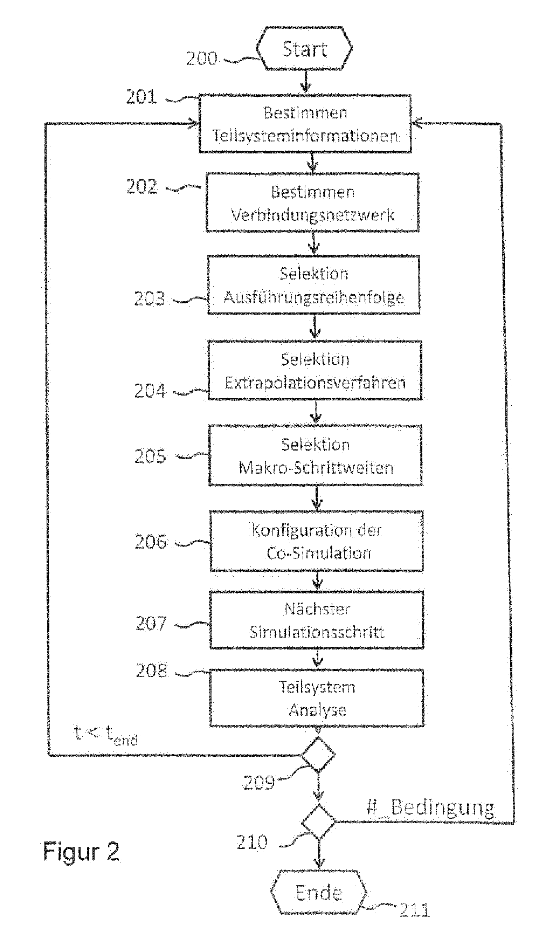

**Fig. 2** zeigt in Zusammenschau mit der Co-Simulation aus Fig. 1 ein beispielhaften Ablauf des erfindungsgemäßen Verfahrens. Nach dem Start 200 werden zunächst Teilsysteminformationen 201 bestimmt. Dabei werden erste Teilsysteminformationen (z.B. direkter Durchgriff, Ein-Ausgangsdynamiken, Momentanfrequenz, Simulationszeiten) des ersten Teilsystems 110 und zweite Teilsysteminformationen des zweiten Teilsystems 120 bestimmt.
Diese Teilsysteminformationen 201 werden in einem initialen Schritt aus einer Datenbank oder über Vorgabe des Anwenders zur Konfiguration herangezogen. Bei nachfolgendem, wiederholtem Durchführen des Verfahrens, können die Teilsysteminformationen, welche in vorherigen Durchläufen des Verfahrens bestimmt wurden, herangezogen werden.

Ferner wird ein Verbindungsnetzwerk 202 bestimmt, welches das erste Teilsystem 110 und das zweite Teilsystem 120 (oder eine Vielzahl weiterer Teilsysteme) an Kopplungen 101, 102, 103 koppelt und bestimmt, welcher der ersten und zweiten Parameterausgänge 112, 122 als Koppelgröße für die entsprechenden ersten und zweiten Parametereingängen 111, 121 bestimmt sind.

Anschließend wird eine Ausführungsreihenfolge 203 selektiert, mittels welcher bestimmt wird, in welcher Reihenfolge zueinander der erste Parameterausgang 112 und der zweite Parameterausgang 122 bestimmt werden uns somit festlegt, welche ersten und/oder zweiten Parametereingänge 121, 131 zum Lösen des Kausalitätsproblems extrapoliert werden müssen.

Anschließend werden Extrapolationsverfahren 204 bestimmt, mittels welcher die ersten und zweiten Parametereingänge 112, 122 während einer Makro-Schrittweite (und zwischen den Koppelzeitpunkten) bestimmbar sind.

Ferner wird eine Makro-Schrittweite 205, welche Koppelzeitpunkte vorgibt, an welchen ein Austausch der entsprechenden ersten und zweiten Eingangsparameter 111, 121 und die ersten und zweiten Ausgangsparameter 112, 122 zwischen den ersten und zweiten Teilsystemen 110, 120 durchgeführt wird.

Abschließend wird die Kopplung 101, 102, 103 des ersten und zweiten Teilsystems 110, 120 konfiguriert basierend auf dem Verbindungsnetzwerk (202), der ersten Teilsysteminformationen und zweiten Teilsysteminformationen, der Ausführungsreihenfolge (203), dem Extrapolationsverfahren (204), der Makro-Schrittweite (205), und die Co-Simulation über den Marko-Zeitschritt durchgeführt.

Nach Start 200 der Co-Simulation werden zur Verfügung stehende Informationen (z.B. Teilsysteminformationen 201) ausgewertet. Für Informationen, welche während der Co-Simulation erst zur Verfügung stehen, werden z.B. Default-Werte verwendet oder in der Konfiguration nicht berücksichtigt. Durch Überlagerung der zur Verfügung stehender Informationen kann daraus z.B. die Ausführungsreihenfolge 203 festgelegt werden. Auf dieser Basis und der zur Verfügung stehenden Informationen werden anschließend, in einem weiteren Schritt, geeignete Extrapolationsverfahren 204 bestimmt. In einem nächsten Schritt werden geeignete Makro-Schrittweiten 205 gewählt, sodass weiterführend die Konfiguration 206 der Co-Simulation für einen anstehenden Makro-Zeitschritt in der Co-Simulation feststeht. Nach diesem Simulationsschritt 207, d.h. beim nächsten Koppelzeitpunkt, erfolgt eine Teilsystemanalyse 208 und ein updaten der bislang gesammelten Teilsysteminformationen 201. Ist nach dem Simulationsschritt das Ende der Co-Simulation nicht erreicht (t < tend), so wiederholt sich dieser Prozess mit jedem Simulationsschritt bis zum Erreichen des Endes (t = t_{end}) der Co-Simulation.

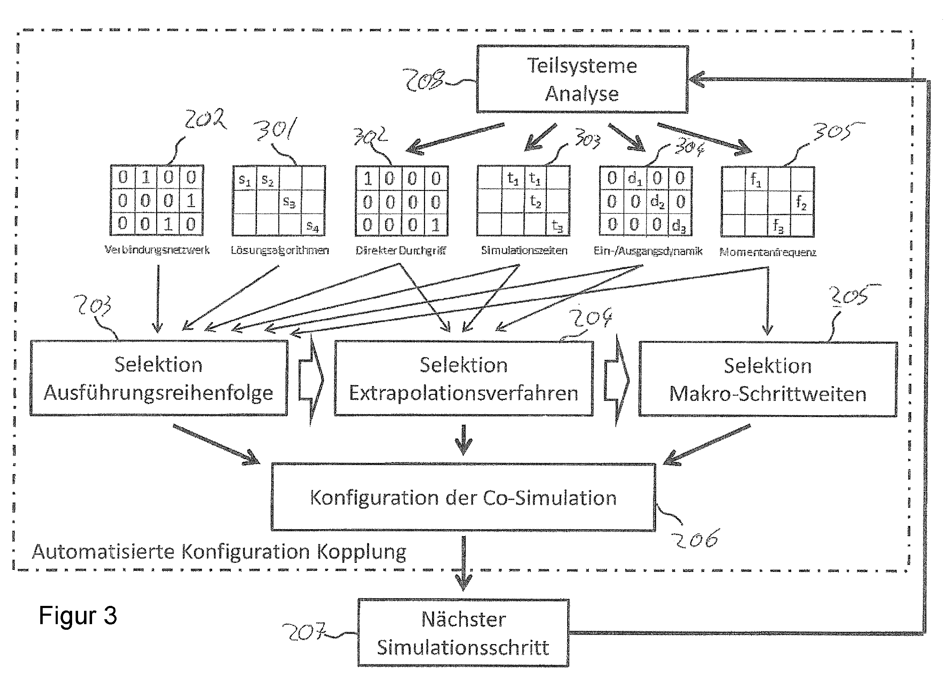

**Fig. 3** beschreibt eine mögliche technische Umsetzung des Verfahrens zur automatisierten Konfiguration während (t < t_{end}) der Co-Simulation. Zwei Teilsysteme 110, 120 sind über eine Kopplung 101 zu einer Co-Simulation verbunden. Nach einer aktuell abgeschlossenen Konfiguration 206 und z.B. somit berechneten Makro-Zeitschritt erfolgt ein nächster Simulationsschritt 207 und eine erneute Teilsystemanalyse 208. In diesem Schritt werden die Teilsysteme 110, 120, 130 anhand der Koppeldaten (der Eingangsparameter 111, 121, 131 und Ausgangsparameter 112, 122, 132) analysiert und relevante Informationen, wie zum Beispiel ein direkter Durchgriff 302, eine Ein-/Ausgangsdynamik 304, einem Momentanfrequenz 305 und/oder Simulationszeiten 303 zur Konfiguration extrahiert bzw. bestimmt. Aus dieser Datenbasis und gemeinsam mit weiteren verfügbaren Informationen, wie zum Beispiel dem Verbindungsnetzwerk 202 und den individuellen Lösungsalgorithmen 301 (114, 124, 134) der entsprechenden Teilsysteme 110, 120, 130 erfolgt die Selektion der Ausführungsreihenfolge 203, die Wahl der Extrapolationsverfahren 204 und die Wahl der Makro-Zeitschrittweiten 205. In einem weiteren Schritt 206 wird die Co-Simulation mit diesen Einstellungen konfiguriert (206). Anschließend wird z.B. der Makro-Zeitschritt gerechnet (207) und der Prozess wiederholt sich bis zum Ende (t = t_{end}) der Co-Simulation.

Weiter beschreibt Fig. 3 eine mögliche Umsetzung zum Abspeichern der Informationen, welche als Datenbasis für eine automatisierte Konfiguration der Co-Simulation dienen. Zur automatisierten Konfiguration einer Co-Simulation werden die verfügbaren Daten beispielhaft in unterschiedlichen Matrizen (z.B. 202, 301, 302, 303, 304, 305) gespeichert. Beispielhaft beschreiben unterschiedlichen Matrizen die Verbindung der Ein- und Ausgänge aller involvierten Teilsysteme 110, 120, 130 bzw. das Verbindungsnetzwerk 202, vorhandene "direkte Durchgriffe" 302 der Teilsysteme 110, 120, 130, Ein-/Ausgangsdynamiken 304 der Teilsysteme 110, 120, 130, die Momentanfrequenzen 305 der Koppelsignale (zum Beispiel in Kopplungen 101, 102, 103), falls verfügbar unterlagerte Lösungsalgorithmen 301 und/oder auch die aktuellen Simulationszeiten 303 der individuellen Teilsysteme 110, 120, 130. Diese Informationen werden zur Laufzeit und/oder im Anschluss der Simulation extrahiert.

In den Matrizen bilden beispielsweise die Spalten die Parametereingänge der Teilsysteme 110, 120, 130 und die Zeilen die Parameterausgänge der Teilsysteme 110, 120, 130.

Das vorgeschlagene Verfahren analysiert lokale (z.B. Teilsystemanalyse) und globale (z.B. Verbindungsnetzwerk) Informationen und nutzt diese zur globalen Konfiguration der Co-Simulation.

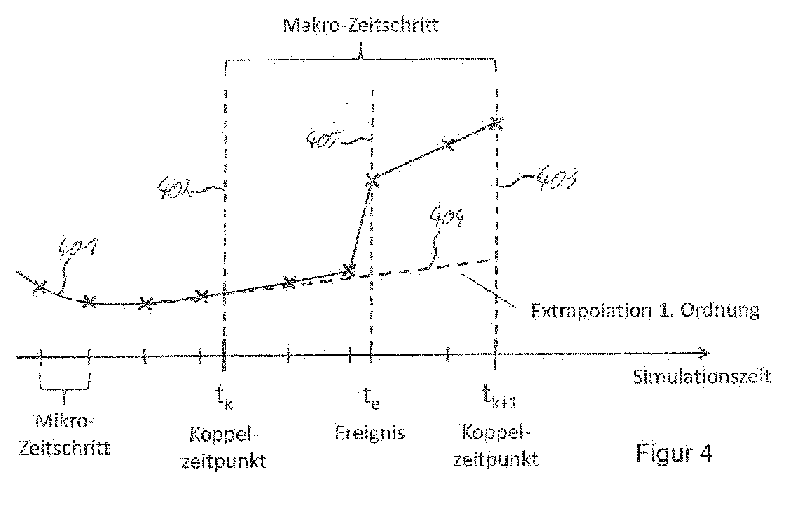

**Fig. 4** zeigt eine Extrapolation zwischen zwei Koppelzeitpunkten. Bei der nicht-iterativen Co-Simulation werden die involvierten Teilsysteme 110, 120, 130 exakt einmal über jeden definierten Makro-Zeitschritt gelöst. Die Ausführungsreihenfolge 203, die Art der Extrapolation 204 und die Wahl der Makro-Zeitschrittweite 205 müssen vor der Berechnung, zum Koppelzeitpunkt, festgelegt werden. Treten während diesem Makro-Zeitschritt z. B. ein diskretes Ereignis oder eine hohe Systemdynamiken auf, so wurde die Co-Simulation für diesen Schritt nicht entsprechend dem Systemverhalten konfiguriert. Dieser Sachverhalt ist in Fig. 4 graphisch dargestellt. Fig. 4 zeigt ein Koppelsignal 401, welches zu den Mikro-Zeitschritten des Lösungsalgorithmus 114, 124, 134 des Teilsystems 110, 120, 130 definiert ist. Zum Koppelzeitpunkt 402 wird das Koppelsignal 401 über den zu berechnenden Marko-Zeitschritt bis zum nächsten Koppelzeitpunkt 403 über Extrapolation 1. Ordnung 404 extrapoliert. Für die Extrapolation werden die letzten beiden Werte aus der Historie des Koppelsignals 401 vor dem Koppelzeitpunkt 402 verwendet. Während der Berechnung des Makro-Zeitschrittes tritt nun ein Ereignis 405 zum Zeitpunkt tₑ in einem Teilsystem 110, 120, 130 auf, was zu einer starken Änderung des Koppelsignals 401 zum Zeitpunkt des Ereignisses 405 führt und somit auch zu einer großen Abweichung des Koppelsignals 401 zum extrapolierten Verlauf 404. Ein Wiederholen der Simulation über diesen Makro-Zeitschritt ist zwar denkbar, praktisch aber nicht dienlich, da z.B. gängige Simulationstools meist keine Möglichkeit bieten Teilsystemsimulationen auf einen vorherigen Koppelzeitpunkt rückzusetzen. Um trotzdem eine zweckmäßige Konfiguration zu gewährleisten wird eine Erweiterung der automatischen Konfiguration gemäß dem erfindungsgemäßen Verfahren eingesetzt.

Eine automatische Konfiguration der Co-Simulation kann u.U. durch den nicht-iterativen Charakter in ihrer Effektivität beschränkt werden. Aus diesem Grund wird hier als Erweiterung des Verfahrens eine wiederholte Co-Simulation derselben Co-Simulation vorgeschlagen, in welcher Wissen aus vorhergehenden Simulationsläufen genutzt wird und entsprechend (automatisiert) Konfigurationen der Ausführungsreihenfolge 203, der Art der Extrapolation 204 und der Wahl der Makro-Zeitschrittweite 205 vorgenommen werden. Jene Stellen, wo Handlungsbedarf in der Konfiguration besteht, sind bereits aus der Historie der Teilsystemanalysen 208 bekannt und werden entsprechend den oben beschriebenen Richtlinien zur automatisierten Konfiguration für den nachfolgenden Co-Simulationslauf adressiert. In Fig. 2 ist diese Erweiterung durch eine zusätzliche Abfrage 210 festgehalten. Ist in der Abfrage 210 die Bedingung "#_Bedingung" erfüllt, so werden basierend auf den verfügbaren Koppelsignalen und auch, aus Teilsystemanalysen 208, generierten Teilsysteminformationen nach dem Co-Simulationsende (t = t_{end}) wiederum Konfigurationen automatisiert getätigt. Bedingung "#_Bedingung" ist erfüllt falls, der Anwender diese Funktion aktiviert UND eine maximale Anzahl an Iterationen nicht erreicht ist ODER eine bestimmte Qualität der Co-Simulation erreicht ist (logisch UND vor logisch ODER).

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: Gesamtsystem
- 110: erste Teilsystem
- 111: erster Eingangsparameter
- 112: erster Ausgangsparameter
- 113: erstes Simulationswerkzeug (Tool 1)
- 114: erster Lösungsalgorithmus (Solver 1)
- 120: zweite Teilsystem
- 121: zweiter Eingangsparameter
- 122: zweiter Ausgangsparameter
- 123: zweites Simulationswerkzeug (Tool 2)
- 124: zweites Lösungsalgorithmus (Solver 2)
- 130: dritte Teilsystem
- 131: dritter Eingangsparameter
- 132: dritter Ausgangsparameter
- 133: drittes Simulationswerkzeug (Tool 3)
- 134: dritter Lösungsalgorithmus (Solver 3)
- 101: erste Kopplung
- 102: zweite Kopplung
- 103: dritte Kopplung
- 200: Start
- 201: Bestimmen Teilsysteminformationen
- 202: Bestimmen Verbindungsnetzwerk
- 203: Selektion eine Ausführungsreihenfolge
- 204: Bestimmen eines Extrapolationsverfahrens
- 205: Bestimmen einer Makroschrittweite
- 206: Konfiguration der Co-Simulation
- 207: Nächster Simulationsschritt
- 208: Analyse
- 209: Entscheidung erneuter Durchlauf
- 210: Entscheidung Ende
- 211: Ende
- 301: Bestimmen von Lösungsalgorithmen
- 302: Bestimmen des direktem Durchgriffs
- 303: Bestimmen der Simulationszeiten
- 304: Bestimmen der Ein-/Ausgangsdynamiken
- 305: Bestimmen der momentan Frequenz
- 401: Koppelsignal
- 402: Koppelzeitpunkt
- 403: Koppelzeitpunkt
- 404: Extrapolation 1. Ordnung
- 405: Ereignis

## Patentansprüche

1. Verfahren zum Konfigurieren einer Co-Simulation für ein Gesamtsystem (100) mit zumindest einem ersten Teilsystem (110) und einem zweiten Teilsystem (120),
wobei das erste Teilsystem (110) zumindest einen ersten Parametereingang (111) und zumindest einen ersten Parameterausgang (112) aufweist,
wobei basierend auf dem ersten Parametereingang (111) mittels eines ersten Lösungsalgorithmus (124) der erste Parameterausgang (112) bestimmbar ist, und
wobei das zweite Teilsystem (120) zumindest einen zweiten Parametereingang (121) und zumindest einen zweiten Parameterausgang (122) aufweist,
wobei basierend auf dem zweiten Parametereingang (121) mittels eines zweiten Lösungsalgorithmus (124) der zweite Parameterausgang (122) bestimmbar ist,
wobei das Verfahren aufweist
Bestimmen eines Verbindungsnetzwerks (202), welches das erste Teilsystem (110) und das zweite Teilsystem (120) an einer Kopplung (101, 102, 103) koppelt und bestimmt, welcher der ersten und zweiten Parameterausgänge (112, 122) als Koppelgröße für die entsprechenden ersten und zweiten Parametereingängen (111, 112) bestimmt sind,
Bestimmen (201) von ersten Teilsysteminformationen des ersten Teilsystems (110) und zweiten Teilsysteminformationen des zweiten Teilsystems (120),
Selektion einer Ausführungsreihenfolge (203), mittels welcher bestimmt wird, in welcher Reihenfolge zueinander der erste Parameterausgang (112) und der zweite Parameterausgang (122) bestimmt werden und somit festlegt, welche ersten und/oder zweiten Parametereingänge extrapoliert werden müssen,
Bestimmen von Extrapolationsverfahren (204), mittels welchen die ersten und zweiten Parametereingänge (111, 121) während einer Makro-Schrittweite bestimmbar sind,
Bestimmen einer Makro-Schrittweite (205), welche Koppelzeitpunkte vorgibt, an welchen ein Austausch der entsprechenden ersten und zweiten Eingangsparameter (111, 121) und der ersten und zweiten Ausgangsparameter (112, 122) zwischen den ersten und zweiten Teilsystemen (110, 120) durchgeführt wird,
Konfigurieren (206) der Kopplung (101, 102, 103) des ersten und zweiten Teilsystems (110, 120) basierend auf dem Verbindungsnetzwerk (202), der ersten Teilsysteminformationen und zweiten Teilsysteminformationen, der Ausführungsreihenfolge (203), und dem Extrapolationsverfahren (204) und der Makro-Schrittweite (205) und Durchführen der Co-Simulation während dem Makro-Zeitschritt.

2. Verfahren gemäß Anspruch 1,
wobei nach einem Makro-Zeitschritt die Co-Simulation beendet wird oder die Co-Simulation erneut durchgeführt wird.

3. Verfahren gemäß Anspruch 1 oder 2,
wobei nach einem Makro-Zeitschritt (207) zum Koppelzeitpunkt eine Teilsystemanalyse (208) durchgeführt wird und basierend auf den Teilsysteminformationen (201) des ersten und/oder zweiten Teilsystems (110, 120), dem Verbindungsnetzwerk (202), die Ausführungsreihenfolge (203), die Extrapolationsverfahren (204) und/oder die Makro-Schrittweite (205) angepasst werden.

4. Verfahren gemäß einem der Ansprüche 1 bis 3,
wobei die Teilsysteminformationen (201) die Ein- und Ausgangsdynamiken (304) der Teilsysteme (110, 120, 130) zwischen ersten Eingangsparameter (111) und ersten Ausgangsparameter (112) des ersten Teilsystems (110) und zwischen zweiten Eingangsparameter (121) und zweiten Ausgangsparameter (122) des zweiten Teilsystems (120) aufweisen.

5. Verfahren gemäß einem der Ansprüche 1 bis 4,
wobei die Teilsysteminformationen (201) eine Simulationszeit (303) des ersten Teilsystems (101) und/oder des zweiten Teilsystems (102) aufweisen.

6. Verfahren gemäß einem der Ansprüche 1 bis 5,
wobei die Teilsysteminformationen (201) eine Momentanfrequenz (305) der ersten und/oder zweiten Eingangsparameter (111, 121) und/oder der ersten und/oder zweiten Ausgangsparameter (112, 122) aufweisen.

7. Verfahren gemäß einem der Ansprüche 1 bis 6,
wobei die Teilsysteminformationen (201) direkten Durchgriff (302) der ersten und/oder zweiten Eingangsparameter (111, 121) auf die ersten und/oder zweiten Ausgangsparameter (112, 122) der Teilsysteme (110, 120, 130) aufweisen.

8. Verfahren gemäß einem der Ansprüche 1 bis 7,
wobei die Teilsysteminformationen (201) eine Berechnungszeit der ersten und/oder zweiten Teilsysteme (110, 120, 130) aufweisen, so dass mittels in Bezug stellen der von den Teilsystemen (110, 120, 130) benötigten Berechnungszeit mit den jeweiligen Makro-Zeitschritten (205) der Teilsysteme (110, 120, 130) zu den jeweiligen Koppelzeitpunkten Anpassungen im zeitlichen Verhalten für die Durchführung der Co-Simulation in Echtzeit durchgeführt werden.

9. Verfahren gemäß einem der Ansprüche 1 bis 8,
wobei die Teilsysteminformationen (201) eine Analyse von Koppelereignissen der ersten und/oder zweiten Eingangsparameter (111, 121) und/oder der ersten und/oder zweiten Ausgangsparameter (112, 122) der Teilsysteme (110, 120, 130) aufweist.

10. Verfahren gemäß einem der Ansprüche 1 bis 9,
wobei der Schritt des Bestimmens der Makro-Schrittweite (205) aufweist
Bestimmen einer ersten Makro-Schrittweite des ersten Teilsystems (110),
wobei die erste Makro-Schrittweite erste Koppelzeitpunkte vorgibt, an welchen jeweils der erste Ausgangsparameter (112) bestimmbar ist,
Bestimmen einer zweiten Makro-Schrittweite des zweiten Teilsystems (120),
wobei die zweite Makro-Schrittweite zweite Koppelzeitpunkte vorgibt, an welchen jeweils der zweite Ausgangsparameter (122) bestimmbar ist.

11. Verfahren gemäß Anspruch 10,
wobei der Schritt des Bestimmens der Extrapolationsverfahren (204) aufweist
Bestimmen von ersten Extrapolationsverfahren des ersten Teilsystems (110), mittels welchen die ersten Parametereingänge (112) während der ersten Makro-Schrittweite bestimmbar sind,
Bestimmen von zweiten Extrapolationsverfahren des zweiten Teilsystems (120), mittels welchen die zweiten Parametereingänge (121) während der zweiten Makro-Schrittweite bestimmbar sind.

12. Vorrichtung zum Konfigurieren einer Co-Simulation für ein Gesamtsystem (100) mit zumindest einem ersten Teilsystem (110) und einem zweiten Teilsystem (120),
wobei das erste Teilsystem (110) zumindest einen ersten Parametereingang (111) und zumindest einen ersten Parameterausgang (112) aufweist,
wobei basierend auf dem ersten Parametereingang (111) mittels eines ersten Lösungsalgorithmus (124) der erste Parameterausgang (112) bestimmbar ist, und
wobei das zweite Teilsystem (120) zumindest einen zweiten Parametereingang (121) und zumindest einen zweiten Parameterausgang (122) aufweist,
wobei basierend auf dem zweiten Parametereingang (122) mittels eines zweiten Lösungsalgorithmus (124) der zweite Parameterausgang (122) bestimmbar ist,
wobei die Vorrichtung aufweist
eine Verbindungseinheit zum Bestimmen eines Verbindungsnetzwerks (202), welches das erste Teilsystem (110) und das zweite Teilsystem (120) an einer Kopplung (101, 102, 103) koppelt und bestimmt, welcher der ersten und zweiten Parameterausgänge (112, 122) als Koppelgröße für die entsprechenden ersten und zweiten Parametereingängen (111, 121) bestimmt sind,
eine Bestimmungseinheit von ersten Teilsysteminformationen des ersten Teilsystems (110) und zweiten Teilsysteminformationen des zweiten Teilsystems (120),
eine Selektionseinheit zur Selektion einer Ausführungsreihenfolge (203), mittels welcher bestimmt wird, in welcher Reihenfolge zueinander der erste Parameterausgang (112) und der zweite Parameterausgang (122) bestimmt werden,
eine Extrapolationseinheit zum Bestimmen von Extrapolationsverfahren (204), mittels welchen die ersten und zweiten Parametereingänge (111, 122) während einer Makro-Schrittweite individuell bestimmbar sind,
eine Schrittweiteneinheit zum Bestimmen einer Makro-Schrittweite, welche Koppelzeitpunkte vorgibt, an welchen eine Austausch der entsprechenden ersten und zweiten Eingangsparameter (111, 121) und die ersten und zweiten Ausgangsparameter (112, 122) zwischen den ersten und zweiten Teilsystemen (110, 120) durchgeführt wird,
ein Konfigurator zum Konfigurieren der Kopplung des ersten und zweiten Teilsystems (110, 120) basierend auf dem Verbindungsnetzwerk (202), der ersten Teilsysteminformationen und zweiten Teilsysteminformationen, der Ausführungsreihenfolge (203), der Extrapolationsverfahren (204), der Makro-Schrittweiten (205) und zum Durchführen der Co-Simulation während der Makro-Schrittweite.

13. Computerlesbares Speichermedium, in dem ein Programm zum Konfigurieren einer Co-Simulation für ein Gesamtsystem (100) gespeichert ist, welches Programm, wenn es von einem Prozessor ausgeführt wird, das Verfahren nach Anspruch 1 ausführt oder steuert.

14. Programm-Element zum Konfigurieren einer Co-Simulation für ein Gesamtsystem (100), welches Programm-Element, wenn es von einem Prozessor ausgeführt wird, das Verfahren nach Anspruch 1 ausführt oder steuert.
